# FASCICULE DE BREVET EUROPEEN

(11) **EP 1 685 952 B1**
(45) Date de publication et mention de la délivrance du brevet: **13.08.2008**
(21) Numéro de dépôt: 05301119.3
(22) Date de dépôt: 29.12.2005
(51) Int. Cl.: B32B 5/12, B32B 5/26, E04D 5/10

(54) **Complexe textile destiné à renforcer mécaniquement un revêtement d'étanchéité à base de bitume**
Textilverbundmaterial zur mechanischen Verstärkung einer auf Bitumen basierenden Abdichtungsbeschichtung
Textile composite for mechanical reinforcement of a bitumen based sealant

(30) Priorité: 28.01.2005 FR 0550248
(43) Date de publication de la demande: 02.08.2006
(73) Titulaire: CHOMARAT COMPOSITES, 75002 Paris (FR)
(72) Inventeur: Chabal, Claude, 07310, SAINT MARTIN DE VALAMAS (FR)
(74) Mandataire: Palix, Stéphane

(56) Documents cités:
- EP-A- 0 315 553
- WO-A-01/08879
- WO-A-98/42905
- WO-A-03/059613
- DE-A1- 19 935 408
- FR-A- 2 562 472
- US-A- 4 743 495
- US-B1- 6 235 657

## Description

### Domaine Technique

L'invention se rattache au domaine des textiles techniques utilisés pour la fabrication de revêtements d'étanchéité à base de bitume notamment. Ce type de revêtement comporte généralement des complexes textiles de renfort mécanique.

L'invention vise plus particulièrement une structure de ce type de complexe, présentant des propriétés améliorées en termes de résistance mécanique et de résistance au feu.

### Techniques antérieures

De façon générale, les revêtements d'étanchéité utilisés en toiture notamment comportent une couche bitumineuse, qu'il est nécessaire de renforcer mécaniquement, car le bitume à lui seul ne possède pas de propriétés mécaniques satisfaisantes.

L'emploi de renforts textiles à l'intérieur de ce type de revêtement est largement connu, et notamment par les documents US-3 193 439 et US 3 937 640.

L'objectif de ces renforts textiles est tout d'abord d'améliorer les propriétés mécaniques du revêtement, en augmentant sa résistance à la traction.

Un autre objectif mécanique du renfort est de conférer au revêtement une résistance au poinçonnement, pour conserver l'étanchéité du revêtement. Par ailleurs, pour de nombreuses applications, on recherche à ce que le revêtement possède des propriétés de résistance au feu, ce qui conduit à l'utilisation de complexes textiles particuliers.

Les complexes utilisés pour ces applications associent donc généralement une structure de grille qui peut être à base de fils de verre ou de fils synthétiques présentant une bonne résistance à la traction. Cette grille est associée à une couche textile du type non tissé qui est généralement à base de fibres de verre pour présenter une résistance au feu et à base de fibres polyester pour présenter une résistance au poinçonnement. La grille et la structure non tissée sont généralement associées par aiguilletage pour éviter tout problème de délaminage, comme décrit dans le brevet EP-0 907 781 du Demandeur.

Le document US 6 235 657 décrit un complexe incluant deux couches de non tissé solidarisées l'une à l'autre par aiguilletage, en emprisonnant une grille textile.

Bien que donnant globalement satisfaction, ce type de renfort présente certains inconvénients. En effet, les opérations d'aiguilletage sont relativement délicates à mettre en oeuvre et imposent des contraintes sur le titre des fibres et la masse surfacique des non tissés utilisés pour obtenir une bonne solidarisation à la grille.

En effet, les procédés d'assemblage fonctionnant par collage qui permettraient de s'affranchir des contraintes précitées ne donnent pas réelle satisfaction d'un point de vue mécanique. Plus précisément, lorsque les colles utilisées sont à base de polychlorure de vinyle (PVC), le caractère thermofusible de cette matière fait que la couche de colle se ramollit lorsqu'elle est en contact avec le bitume du revêtement, qui est fréquemment à une température voisine de 180°C à 200°C. Le collage est donc dégradé, et les risques de délaminage sont très importants. A l'inverse, on connaît également les colles à base de latex (SBR) qui présentent une meilleure résistance à la température. Cependant, ces matériaux sont du type thermodurcissable, et sont donc cassants, et de façon générale moins résistants mécaniquement,.

L'objectif de l'invention est donc de proposer un renfort qui présente d'excellentes propriétés de résistance mécanique, à la fois au poinçonnement et à la traction, et qui en outre, possède un très bon comportement de résistance au feu.

Un autre objectif de l'invention est de permettre la réalisation de ce type de renfort complexe avec un procédé de réalisation simple, qui n'augmente pas le prix de revient du renfort.

### Exposé de l'invention

L'invention concerne donc un complexe textile, destiné à renforcer mécaniquement un revêtement d'étanchéité à base notamment de bitume.

Conformément à l'invention, ce complexe comporte :
- une première couche d'un matériau non tissé à base de fibres synthétiques, présentant une résistance au poinçonnement ;
- une seconde couche d'un matériau non tissé, à base de fibres minérales ou synthétiques présentant une résistance au feu ;
- une structure grille interposée entre les première et seconde couches, et dont les fils de chaîne et de trame sont liés entre eux au niveau de leur point de croisement par l'intermédiaire d'une colle thermodurcissable assurant également un collage des première et seconde couches sur ladite grille.

Autrement dit, l'invention consiste à réaliser un complexe qui combine deux couches non tissées, dont l'une possède des propriétés de résistance au poinçonnement, et l'autre des propriétés de résistance au feu, l'association entre ces deux non tissés étant réalisée par l'adhésion à une structure de grille conférant elle-même certaines propriétés de résistance à la traction, de stabilité dimensionnelle, d'allongement . On notera que c'est la colle assurant la cohésion des fils de chaîne et de trame de la grille qui maintient les deux couches non tissées sur chacune des faces de la grille.

En pratique, la couche de non tissé présentant des propriétés de résistance au poinçonnement peut être réalisée à base de fibres synthétiques choisies dans le groupe comprenant le polyester, le polyamide et de façon générale les autres fibres résistantes à la température du bitume. En ce qui concerne la couche présentant des propriétés de résistance au feu, on pourra utiliser comme matériau principalement du verre, mais également des non tissés à base de fibres de carbone ou d'aramide.

Les fils constituant la grille peuvent être des fils à haute ténacité, tels que des fils de verre, de carbone et d'aramide également.

Il peut également s'agir d'une grille mixte combinant des fibres de haute ténacité avec du polyester, afin de combiner les propriétés résistant à la traction, de l'allongement à la rupture, et de stabilité dimensionnelle.

La colle utilisée pour réaliser la grille peut être à base de latex, et de manière générale une colle possédant des propriétés de résistance à la chaleur. Il est à noter que l'emploi d'un matériau thermodurcissable pour la colle de la grille ne dégrade pas les propriétés mécaniques de l'ensemble, qui au contraire, sont améliorées par la présence de la couche non tissée présentant la résistance au poinçonnement.

L'invention concerne donc également un procédé de fabrication de ce type de complexe.

Ce procédé consiste :
- à fabriquer une grille par imprégnation des fils de chaîne et de trame à l'aide d'une colle thermodurcissable;
- à la sortie du bain d'encollage de la grille, à déposer sur chacune des faces de la grille des non tissés de nature différente à savoir une première couche de matériau non tissé à base de fibres synthétiques, présentant une résistance au poinçonnement, et une seconde couche d'un matériau non tissé à base de fibres minérales ou synthétiques présentant une résistance au feu;
- à soumettre l'ensemble à une polymérisation , de manière à assurer le collage des deux non tissés sur la grille au moyen de la colle qui assure la cohésion des différents fils de la grille.

Autrement dit, ce procédé consiste à réaliser le complexe en une seule étape par association des deux non tissés sur la grille, avant même que la colle de cohésion de la grille ne soit totalement polymérisée. L'emploi de matériaux hétérogènes en ce qui concerne les deux non tissés pourraient faire craindre des effets de retrait différentiels assimilables à un effet bilame, et donc l'apparition d'irrégularités de surface. Or, on a noté, qu'en maîtrisant les températures de réticulation et les tensions sur la machine , la réalisation du complexe en une seule étape, par l'amenée des deux non tissés simultanément, ne produit pas ces effets de retrait différentiels et de manque de planéité.

### Description sommaire des figures

La manière de réaliser l'invention ainsi que les avantages qui en découlent ressortiront bien de la description du mode de réalisation, donné à l'appui des figures annexées dans lesquelles :
- la figure 1 est une vue en perspective sommaire d'un complexe conforme à l'invention, montré partiellement délaminé ;
- la figure 2 est un schéma explicatif du procédé permettant de réaliser le complexe de la figure 1.

### Manière de réaliser l'invention

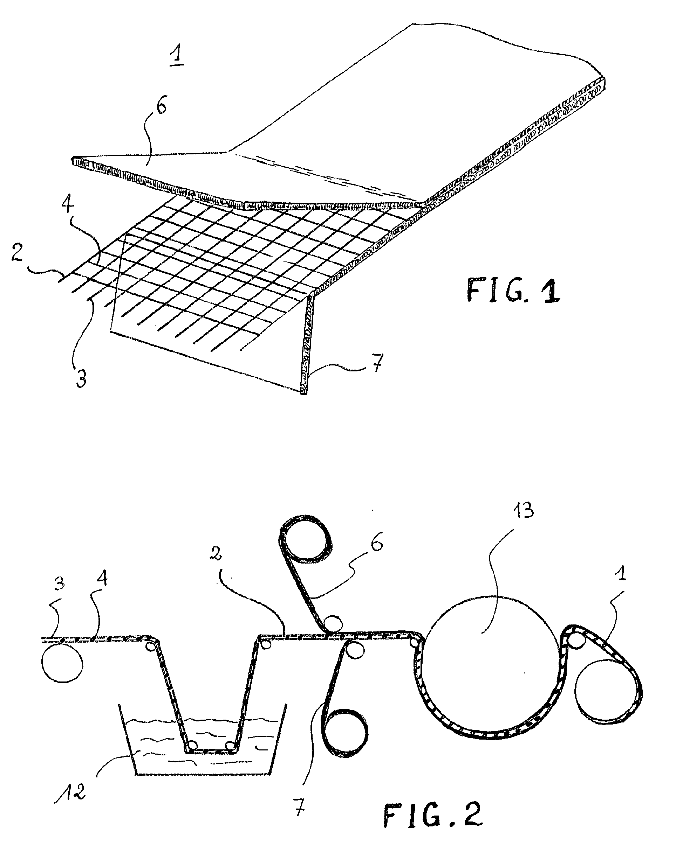

Comme illustré à la figure 1, le complexe (1) se compose de trois couches distinctes, à savoir une grille (2) comportant sur chacune de ses faces un non tissé (6,7). Plus précisément, la grille (2) est constituée de fils de chaîne (3) et de fils de trame (4). On peut par exemple réaliser une grille composée de fils de verre de 68 tex en chaîne et en trame, à raison de 4 fils par centimètres, avec une maille de 2mm environ. On peut également réaliser une grille mixte de 3 fils/cm dans chaque sens, associant par centimètre 1 fil de verre de 136 tex et 2 fils de polyester de 110 tex, avec une maille de 3mm environ.

Le non tissé (6) destiné à se trouver sur la face supérieure du revêtement d'étanchéité est réalisé à base de fibres de verre. Plus précisément, ce non tissé peut être réalisé à base de fibres de l'ordre de 9 à 17 micromètres de diamètre, et de 10 à 25 mm de longueur Ce non tissé présente un grammage de l'ordre de 50 g/m². On obtient de bons résultats en utilisant un non tissé commercialisé sous la référence U50/2 par la société VETROTEX ST GOBAIN. Ce non tissé de verre (6) permet de conférer au renfort un aspect de surface régulier, compensant les irrégularités de la grille (2). Il procure également des propriétés de résistance au feu et de stabilité dimensionnelle.

Comme déjà évoqué, ce non tissé (6) peut être réalisé également à base d'autres fibres présentant un comportement analogue de résistance à la température, parmi lesquelles figurent les fibres de carbone ou d'aramide.

Le second non tissé (7), disposé sur la face opposée de la grille (2), est quant à lui, réalisé à base de polyester, ou selon d'autres applications, à base de fibres synthétiques appropriés tel que le polyamide. Ces fibres de polyester utilisées sont également à base des fibres courtes ou de filaments continus (spunbond), pour former un grammage supérieur à 30 g/m², de manière à obtenir une résistance au poinçonnement satisfaisante.

Le complexe global (1) comporte donc une épaisseur comprise entre 0,8 et 1,5 mm. Il est obtenu, comme illustré à la figure 2, par un procédé mis en oeuvre en une seule étape. Plus précisément, la structure de grille (2) est formée par l'assemblage des fils de chaîne (3) et des fils de trame (4). Cette structure est ensuite encollée dans le bain d'encollage (12). Ce bain d'encollage comporte de façon classique une colle du type styrène butadiène, acrylique ou acétate de polyvinyle. A la sortie du bain d'encollage (12), la grille et la colle non encore polymérisée sont amenées au poste de dépôt des deux non tissés (6,7). De la sorte, la colle non encore polymérisée imprègne ces deux non tissés. L'ensemble est ensuite réticulé par passage sur un cylindre chauffant (13) afin d'assurer la polymérisation totale de la colle. Le complexe (1) est ensuite enroulé en vue de son utilisation ultérieure.

Il ressort de ce qui précède que le complexe conforme à l'invention présente de multiples avantages, notamment celui de combiner un aspect de surface, une résistance au feu et une stabilité dimensionnelle grâce à l'une de ses couches non tissées, avec une résistance à la déchirure et au poinçonnement conférée par la deuxième couche complexe. L'ensemble présente une résistance à la traction grâce à la grille intermédiaire. Le complexe présente également l'avantage d'être fabriqué en une seule étape.

## Revendications

1. Complexe textile (1) destiné à renforcer mécaniquement un revêtement d'étanchéité à base de bitume ou de matériaux synthétiques, **caractérisé en ce qu'**il comporte:
- une première couche (7) d'un matériau non tissé à base de fibres synthétiques, présentant une résistance au poinçonnement ;
- une seconde couche (6) d'un matériau non tissé à base de fibres minérales ou synthétiques présentant une résistance au feu ;
- une structure de grille (2) interposée entre les première et seconde couches (6,7), dont les fils de chaîne (3) et de trame (4) sont liés entre eux au niveau de leurs points de croisement par l'intermédiaire d'une colle thermodurcissable assurant également un collage des première (7) et seconde (6) couches sur la grille (2).

2. Complexe selon la revendication 1, **caractérisé en ce que** la première couche (7) est à base d'un matériau résistant à la température, notamment choisi dans le groupe comprenant le polyester, le polyamide.

3. Complexe selon la revendication 1, **caractérisé en ce que** les fibres de la seconde couche (6) sont à base d'un matériau choisi dans le groupe comprenant le verre, le carbone, l'aramide.

4. Complexe selon la revendication 1, **caractérisé en ce que** les fils de la grille (2) sont à base d'un matériau à haute ténacité.

5. Complexe selon la revendication 4, **caractérisé en ce que** les fils de la grille (2) sont à base d'un matériau résistant à la température, notamment choisi dans le groupe comportant les fils de verre, de carbone, d'aramide et de polyester.

6. Procédé de fabrication d'un complexe textile destiné à renforcer mécaniquement un revêtement d'étanchéité à base de bitume, **caractérisé en ce qu'**il consiste :
- à fabriquer une grille (2) par collage des fils de chaîne (3) et de trame (4) à l'aide d'une colle thermodurcissable ;
- à la sortie du bain d'encollage (12), à déposer sur chacune des faces de la grille, deux non tissés (6,7) de nature différente, à savoir une première couche (6) de matériau non tissé à base de fibres synthétiques, présentant une résistance au poinçonnement, et une seconde couche (7) d'un matériau non tissé à base de fibres minérales ou synthétiques présentant une résistance au feu ;
- à soumettre l'ensemble (1) à une réticulation (13)

## Claims

1. A textile composite (1) intended for mechanical reinforcement of a bitumen or synthetic-material based waterproof coating, **characterised in that** it comprises:
- a first layer (7) of a non-woven fabric material based on synthetic fibres that is puncture resistant;
- a second layer (6) of a non-woven fabric material based on mineral or synthetic fibres that is fire resistant;
- a grid structure (2) placed between the first and second layers (6, 7), the warp yarns (3) and weft yarns (4) of which are connected to each other at the point where they cross by means of an adhesive which also ensures bonding of the first (7) and second (6) layers on grid (2).

2. A composite as claimed in claim 1, **characterised in that** the first layer (7) is based on a heat resistant material, selected, in particular, from a group that includes polyester and polyamide.

3. A composite as claimed in claim 1, **characterised in that** the fibres of the second layer (6) are based on a material selected from a group that includes glass, carbon and aramid.

4. A composite as claimed in claim 1, **characterised in that** the yarns of the grid (2) are based on a high-tenacity material.

5. A composite as claimed in claim 4, **characterised in that** the yarns of the grid (2) are based on a heat resistant material, selected, in particular, from a group that includes glass fibre, carbon, aramid and polyester yarns.

6. A method for manufacturing a textile composite intended for mechanical reinforcement of a bitumen-based waterproof coating, **characterised in that** it involves:
- manufacturing a grid (2) by bonding the warp yarns (3) and weft yarns (4);
- after removal of the grid from the liquid adhesive (12), applying two non-woven fabrics (6, 7) of different type onto each of the surfaces of the grid;
- subjecting this assembly (1) to cross-linking (13).

## Patentansprüche

1. Textilkomplex (1), der dazu bestimmt ist, eine Dichtungsverkleidung auf Basis von Bitumen oder synthetischen Materialien mechanisch zu verstärken, **dadurch gekennzeichnet, dass** er umfasst:
- eine erste Schicht (7) eines Faservlies- Materials auf Basis synthetischer Fasern, die einen Durchdrückwiderstand aufweist;
- eine zweite Schicht (6) eines Faservlies- Materials auf Basis mineralischer oder synthetischer Fasern, die eine Feuerbeständigkeit aufweist;
- eine zwischen die erste und zweite Schicht (6, 7) eingesetzte Gitterstruktur (2), deren Ketten- (3) und Schussfäden (4) untereinander durch die Vermittlung eines duroplastischen Klebers, der ebenfalls eine Klebung der ersten (7) und der zweiten Schicht (6) auf dem Gitter gewährleistet, in ihren Kreuzpunkten verbunden sind.

2. Komplex gemäß Anspruch 1, **dadurch gekennzeichnet, dass** die erste Schicht (7) auf einem temperaturbeständigen Material, insbesondere ausgewählt aus der das Polyester und das Polyamid umfassenden Gruppe, basiert.

3. Komplex gemäß Anspruch 1, **dadurch gekennzeichnet, dass** die Fasern der zweiten Schicht (6) auf einem Material, ausgewählt aus der das Glas, den Kohlenstoff und das Aramid umfassenden Gruppe, basieren.

4. Komplex gemäß Anspruch 1, **dadurch gekennzeichnet, dass** die Fäden des Gitters (2) auf einem Material von hoher Festigkeit basieren.

5. Komplex gemäß Anspruch 4, **dadurch gekennzeichnet, dass** die Fäden des Gitters (2) auf einem temperaturbeständigen Material, insbesondere ausgewählt aus der die Glas-, Kohlenstoff-, Aramid- und Polyesterfäden umfassenden Gruppe, basieren.

6. Verfahren zur Herstellung eines Textilkomplexes, der dazu bestimmt ist, eine Dichtungsverkleidung auf Basis von Bitumen mechanisch zu verstärken, **dadurch gekennzeichnet, dass** er besteht aus:
- der Herstellung eines Gitters (2) durch Klebung der Ketten- (3) und Schussfäden (4) mit Hilfe eines duroplastischen Klebers;
- dem Anbringen zweier Faservliese (6, 7) unterschiedlicher Natur auf jeder der Seiten des Gitters am Ausgang des Klebebades (12), und zwar eine erste Schicht (6) aus Faservlies- Material auf Basis von synthetischen Fasern, das einen Durchdrückwiderstand aufweist, und eine zweite Schicht (7) aus Faservlies- Material auf Basis von mineralischen oder synthetischen Fasern, das eine Feuerfestigkeit aufweist;
- dem Unterziehen der Gesamtheit (1) einer Vernetzung (13).
